Europäisches Patentamt

European Patent Office

Office européen des brevets

(19)

(11) Numéro de publication: **0 388 567 B1**

(12) **FASCICULE DE BREVET EUROPEEN**

(45) Date de publication de fascicule du brevet: **29.03.95** (51) Int. Cl.⁶: **C01F 17/00**, B01J 23/10

(21) Numéro de dépôt: **89403539.3**

(22) Date de dépôt: **19.12.89**

(54) **Oxyde cérique à grande surface spécifique et son procédé d'obtention.**

(30) Priorité: **23.12.88 FR 8817069**

(43) Date de publication de la demande:
**26.09.90 Bulletin 90/39**

(45) Mention de la délivrance du brevet:
**29.03.95 Bulletin 95/13**

(84) Etats contractants désignés:
**AT BE CH DE ES FR GB GR IT LI LU NL SE**

(56) Documents cités:
**EP-A- 0 153 228**
**EP-A- 0 208 580**
**EP-A- 0 238 367**
**EP-A- 0 239 478**

(73) Titulaire: **RHONE-POULENC CHIMIE**
**25, Ouai Paul Doumer**
**F-92408 Courbevoie Cédex (FR)**

(72) Inventeur: **Le Loarer, Jean-Luc**
**24, rue du Général Guillaumat**
**F-17000 La Rochelle (FR)**
Inventeur: **Picard, Françoise**
**50, avenue de la Dame Blanche**
**F-94120 Fontenay sous Bois (FR)**
Inventeur: **David, Claire**
**14bis, rue Friant**
**F-75014 Paris (FR)**

(74) Mandataire: **Esson, Jean-Pierre et al**
**RHONE-POULENC CHIMIE,**
**Direction de la Propriété Industrielle,**
**25, quai Paul Doumer**
**F-92408 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un oxyde cérique à caractéristiques morphologiques améliorées. L'invention vise également l'un des procédés d'obtention dudit oxyde.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER - EMMETT - TELLER décrite dans le périodique "The Journal of American Society, 60, 309 (1938)".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + $H_2$ sur des catalyseurs au platine déposé sur de l'oxyde cérique. (C.R. Acad. Sc. Paris t. 297 - Série II - 471 - 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroît rapidement pour des températures de fonctionnement supérieures à 500°C. Ainsi, R. ALVERO et coll. (J. Chem. Soc. Dalton Trans 1984, 87) ont obtenu à partir de cérinitrate d'ammonium, un oxyde cérique présentant après calcination à une température de 600°C, une surface spécifique de 29 $m^2$/g.

Par ailleurs, on a décrit dans FR-A 2 559 754 un oxyde cérique présentant une surface spécifique d'au moins 85 ± 5 $m^2$/g obtenue après calcination entre 350 et 450°C et, de préférence, située entre 100 et 130 $m^2$/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination. L'oxyde cérique obtenu présente une surface spécifique intéressante lorsqu'il est utilisé dans une gamme de température de calcination allant de 300 à 600°C. Toutefois, on note une chute de la surface spécifique après calcination à une température plus haute, la surface spécifique étant de 10 $m^2$/g, après calcination à 800°C.

On peut également citer FR-A 2 559 755 qui concerne un oxyde cérique présentant une surface spécifique d'au moins 85 ± 5 $m^2$/g après calcination entre 350 et 500°C, et, de préférence, située entre 150 et 180 $m^2$/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé présente une grande surface spécifique, mais lorsqu'il est soumis à une opération de calcination à 800°C, sa surface spécifique décroît considérablement et se situe vers 10 $m^2$/g.

Dans la demande de brevet européen n° 88 401593.4, la demanderesse a décrit un procédé pour accroître et stabiliser à haute température, la surface spécifique d'un oxyde cérique.

Ce procédé consiste à soumettre l'hydroxyde cérique, précurseur d'oxyde cérique, à un traitement solvothermal avant l'opération de calcination.

Plus particulièrement, le procédé décrit dans ladite demande consiste :
- à mettre l'hydroxyde cérique en suspension dans un milieu liquide,
- le chauffer dans une enceinte close jusqu'à une température et une pression inférieures respectivement à la température critique et à la pression critique dudit milieu,
- à refroidir le milieu réactionnel et à le ramener à la pression atmosphérique,
- à séparer l'hydroxyde cérique ainsi traité,
- puis à le calciner.

On entend par hydroxyde cérique, un oxyde cérique hydraté $CeO_2$, $2H_2O$ ou bien un hydroxyde cérique pouvant contenir des quantités résiduelles d'anions liés ou adsorbés tels que, par exemple, chlorures, sulfates, nitrates, acétates, formiates, etc...

Un mode de réalisation préférentiel du procédé décrit dans la demande de brevet européen n° 88 401593.4 consiste à faire appel à une solution de base, comme milieu liquide d'autoclavage.

2

Un tel procédé permet, non seulement d'accroître la surface spécifique de l'oxyde cérique obtenu, mais également de conserver une surface spécifique élevée jusqu'à des températures de 900°C.

En soumettant un hydroxyde cérique préparé en faisant réagir une solution de sel de cérium et une base éventuellement en présence d'un agent oxydant, dans des conditions de pH supérieur à 7, à un traitement d'autoclavage en milieu basique, la demanderesse propose selon la demande de brevet européen n° 88 401594.2, un oxyde cérique présentant une surface spécifique à 800-900°C jamais atteinte par les produits décrits dans l'état de la technique.

L'oxyde cérique ainsi obtenu présente une surface spécifique d'au moins 15 m$^2$/g mesurée après calcination à une température comprise entre 800 et 900°C et, de préférence, comprise entre 20 et 60 m$^2$/g mesurée après calcination à une température de 800°C.

Il présente une surface spécifique comprise entre 160 et 15 m$^2$/g mesurée après calcination à une température comprise entre 350 et 900°C.

C'est ainsi qu'il peut présenter une surface spécifique variant entre 70 et 160 m$^2$/g et, de préférence, de 100 à 160 m$^2$/g, mesurée après calcination entre 350 et 450°C.

Dans la présente demande, les surfaces spécifiques exprimées sont mesurées sur un produit ayant subi une calcination d'au moins 2 heures à la température donnée.

Poursuivant ses recherches, la demanderesse a trouvé qu'en mettant en oeuvre le procédé décrit dans la demande de brevet européen n° 88 401593.4 mais sélectionnant l'hydroxyde cérique de départ et le milieu liquide de dispersion, on obtenait d'une manière inattendue, un oxyde cérique présentant des caractéristiques morphologiques encore améliorées.

Par rapport aux produits antérieurs, la demanderesse propose un oxyde cérique présentant une surface spécifique élevée, aussi bien après calcination à basse température qu'à température élevée.

La caractéristique de l'oxyde cérique de l'invention est qu'il présente une surface spécifique d'au moins 190 m$^2$/g, de préférence d'au moins 200 m$^2$/g, mesurée après calcination à une température comprise entre 350 et 450°C. Plus précisément, la surface spécifique donnée est mesurée sur un oxyde cérique ayant subi une opération de calcination à la température indiquée.

L'oxyde cérique préféré de l'invention présente une surface spécifique comprise entre 220 et 280 m$^2$/g, mesurée après calcination à une température comprise entre 350 et 450°C.

Une autre caractéristique de l'oxyde cérique de l'invention est qu'il présente une grande surface spécifique après calcination à température élevée.

C'est ainsi qu'il présente une surface spécifique d'au moins 15 m$^2$/g mesurée à une température comprise entre 800°C et 900°C et, de préférence, comprise entre 20 et 100 m$^2$/g, mesurée après calcination à une température de 800°C.

L'oxyde cérique de l'invention présente une grande surface spécifique entre 190 et 280 m$^2$/g, mesurée après calcination entre 350°C et 450°C. Lorsqu'il est soumis, à une température plus élevée pouvant atteindre 900°C, au moment de son utilisation, notamment dans le domaine de la catalyse, il présente la caractéristique de conserver une surface spécifique élevée.

Cette dernière est comprise entre 20 et 90 m$^2$/g pour une température de traitement de 800°C.

L'oxyde cérique de l'invention présente un volume poreux variant entre environ 0,15 cm$^3$/g et environ 0,30 cm$^3$/g, mesuré après calcination à une température entre 350°C et 450°C.

Le volume poreux correspondant aux pores de diamètre inférieur à 60 nm (600 Å) est mesuré au porosimètre à mercure selon la norme ASTM D4284-83 ou suivant la méthode des isothermes d'adsorption d'azote, méthode B.E.T. précitée.

Après calcination à une température de 800°C, il présente un volume poreux variant entre environ 0,15 cm$^3$/g et environ 0,30 cm$^3$/g.

L'oxyde cérique de l'invention obtenu après calcination entre 350°C et 450°C présente un diamètre moyen (d$_{50}$) de pores variant entre 2 nm (20 Å) et 10 nm (100 Å).

On définit le diamètre moyen comme étant un diamètre tel que tous les pores inférieurs à ce diamètre constituent 50 % du volume poreux (Vp) total des pores de diamètre inférieur à 60 nm (600 Å).

Après calcination à une température de 800°C, il présente un diamètre moyen de pores variant entre environ 10 nm (100 Å) et environ 20 nm (200 Å).

L'analyse par diffraction X montre que l'oxyde cérique de l'invention présente une phase cristalline de type CeO$_2$ ayant un paramètre de maille variant de 0,542 nm (5,42 Å) à 0,544 nm (5,44 Å) et un taux de cristallisation élevé, supérieur à 80 % pour un oxyde cérique obtenu après calcination à une température comprise entre 350°C et 450°C et supérieur à 90 % pour un oxyde cérique obtenu après calcination à une température de 800°C.

Le procédé d'obtention de l'oxyde cérique présentant une surface spécifique d'au moins 190 m$^2$/g mesurée après calcination à une température comprise entre 350°C et 450°C est caractérisé par le fait qu'il consiste :

- à mettre en suspension dans une solution aqueuse d'une base décomposable, un hydroxyde cérique répondant à la formule générale (I) =

$$Ce\ (M)_x\ (OH)_y\ (NO_3)_z \qquad (I)$$

dans laquelle :
- M représente un métal alcalin ou un radical ammonium quaternaire,
- x est compris entre 0,01 et 0,2,
- y est tel que y = 4 - z + x,
- z est compris entre 0,4 et 0,7.
- à chauffer ladite suspension dans une enceinte close jusqu'à une température et une pression inférieures respectivement à la température critique et à la pression critique dudit milieu, (appelé également autoclavage)
- à refroidir le milieu réactionnel et à le ramener à la pression atmosphérique,
- à séparer l'hydroxyde cérique ainsi traité,
- puis à le calciner.

La demanderesse à trouvé qu'un oxyde cérique à grande surface spécifique aussi bien à basse température qu'à température élevée, pouvait être obtenu en soumettant un hydroxyde cérique ou hydrate d'oxyde cérique obtenu par hydrolyse en milieu basique d'un sel de cérium IV, à un traitement d'autoclavage effectué en milieu basique.

Intervient donc dans le procédé de l'invention, un hydroxyde cérique répondant à la formule (I). Celui-ci fait l'objet de la demande de brevet EP-A 0 208 580.

Il s'agit plus précisément, d'un hydroxynitrate de cérium IV qui possède la propriété de se peptiser, c'est-à-dire de donner un sol par simple mise en dispersion dans l'eau.

L'analyse thermique différentielle dudit produit révèle lors de sa calcination sous atmosphère d'air un pic exothermique de 250°C à 300°C pour une montée en température de 300°C par heure.

Il présente une phase cristalline type $CeO_2$ ayant un paramètre de maille de 0,542 nm à 0,544 nm et un taux de cristallisation variant de 30 à 70 % et, de préférence, de 40 à 60 %.

L'hydroxyde cérique répondant à la formule (I) avec les caractéristiques précitées qui est mis en oeuvre selon l'invention est préparé selon un procédé décrit dans EP-A O 208 580 qui consiste à préparer une dispersion colloïdale d'un composé de cérium IV en faisant réagir une solution aqueuse d'un sel de cérium IV et une base de telle sorte que l'on obtienne un taux de neutralisation inférieur ou égal à 3,0 ; à soumettre ladite dispersion à un traitement thermique puis à séparer le précipité formé.

Dans la première étape du procédé décrit dans EP-A 0 208 580, on prépare une dispersion colloïdale d'un composé de cérium IV. Dans celle-ci, le cérium IV se trouve simultanément sous forme d'ions et de colloïdes ce qui signifie qu'il y a présence de particules de dimensions colloïdales. On désigne par "dispersion colloïdale", ce mélange ions-colloïdes.

On réalise la préparation de ladite dispersion colloïdale en faisant réagir une solution aqueuse d'un sel de cérium IV avec une base dans les conditions définies ci-après.

La solution de sel de cérium IV peut être une solution aqueuse de nitrate cérique ou une solution aqueuse de nitrate céri-ammoniacal. Ladite solution peut contenir sans inconvénient du cérium à l'état céreux mais il est souhaitable qu'elle contienne au moins 85 % de cérium IV.

La concentration de la solution de sel de cérium n'est pas un facteur critique et peut varier entre 0,1 et 2 moles/litre, de préférence, entre 1 et 2 moles/litre : ladite concentration étant exprimée en cérium IV.

La solution aqueuse de sel de cérium IV présente généralement une certaine acidité initiale et peut avoir une normalité variant entre 0,1 et 4 N et, de préférence, entre 0,1 N et 1 N.

La solution de nitrate cérique obtenue selon le procédé d'oxydation électrolytique d'une solution de nitrate céreux et qui est décrite dans FR-A 2 570 087 constitue une matière première de choix.

Pour ce qui est de la base mise en oeuvre, on peut faire appel à une solution aqueuse d'ammoniaque, d'hydroxyde de sodium ou de potassium. On peut également faire appel à l'ammoniac gazeux. On met en oeuvre, de préférence, une solution d'ammoniaque.

La normalité de la solution basique n'est pas un facteur critique et peut varier entre 0,1 N et 11 N, de préférence, entre 0,1 N et 5 N.

La proportion entre la solution basique et la solution de sel de cérium IV doit être telle que le taux de neutralisation est supérieur ou égal à 0,01 et inférieur ou égal à 3,0.

4

On définit la taux de neutralisation r par l'équation suivante :

$$r = \frac{n3 - n2}{n1}$$

dans laquelle ;
- n1 représente le nombre de moles de Ce IV présentes dans la dispersion colloïdale finale
- n2 représente le nombre de moles $OH^-$ nécessaires pour neutraliser l'acidité apportée par la solution aqueuse de sel de cérium IV
- n3 représente le nombre total de moles $OH^-$ apportées par l'addition de la base.

Le taux de neutralisation reflète l'état colloïdal du cérium IV :
- avec r = 4, le cérium IV précipite sous forme gélatineuse
- avec r = 0, le cérium IV est sous forme ionique
- avec O < r < 4, le cérium IV est sous forme ionique et/ou colloïdale.

Pour une concentration finale en cérium IV inférieure à 0,5 mole/litre, on choisit un taux de neutralisation supérieur ou égal à 0,01 et inférieur ou égal à 2,5 et pour une concentration supérieure à 0,5 mole/litre, on le choisit, de préférence, supérieur ou égal à 0,01 et inférieur ou égal à 2,0.

D'une manière pratique, pour obtenir un taux de neutralisation désiré r choisi dans l'intervalle précité pour une concentration donnée en Ce IV dans la dispersion colloïdale finale, on ajuste la concentration de la solution basique de telle sorte qu'elle satisfasse à l'équation suivante :

$$[OH^-] = \frac{(n_1 . r + n_2) \; [Ce\;IV]_f \quad [Ce\;IV]_i}{n_1 \; ( \; [Ce\;IV]_i - \; [Ce\;IV]_f )}$$

- $[OH^-]$ représente la concentration en moles/litre de la solution basique
- $[Ce\;IV]_f$ représente la concentration en Ce IV en moles/litre de la dispersion colloïdale finale
- $[Ce\;IV]_i$ représente la concentration en Ce IV en moles/litre de la solution aqueuse de sel de cérium IV
- $n_1$ et $n_2$ sont déterminés par dosage classique de la solution aqueuse du sel de cérium IV :
  . $n_1$ par titrage potentiométrique à l'aide d'une solution d'un sel ferreux
  . $n_2$ par titrage acido-basique après complexation du cérium à l'aide d'ions oxalate.

La réaction entre la solution aqueuse de sel de cérium IV et la base mise en oeuvre dans les quantités précédemment définies est effectuée à une température qui peut se situer entre 0°C et 60°C mais, de préférence, à la température ambiante, soit le plus souvent 15 à 25°C.

On peut réaliser le mélange des réactifs précités selon plusieurs variantes. Par exemple, on peut faire le mélange simultané, sous agitation de la solution aqueuse du sel de cérium IV et de la solution basique ou bien additionner en continu ou en une seule fois, la base dans la solution aqueuse de sel de cérium IV ou inversement.

La durée du mélange peut varier entre 0,1 seconde et 30 heures et est choisie, de préférence, entre 2 heures et 6 heures.

Conformément au procédé décrit dans EP-A 0 208 580, on obtient une dispersion colloïdale d'un composé de cérium IV en milieu aqueux.

Elle présente une concentration en cérium IV qui peut varier entre 0,1 et 2 moles/litre, de préférence, de 0,3 à 0,8 mole/litre. Le taux de cérium IV sous forme colloïdale est compris, généralement entre 10 et 90 % du cérium IV mis en oeuvre.

Le diamètre hydrodynamique moyen des colloïdes déterminé par diffusion quasi-élastique de la lumière selon la méthode décrite par Michael L. Mc CONNELL dans Analytical Chemistry 53, n°8, 1007 A (1981), peut varier entre 4 et 30 nm.

Selon le procédé décrit dans EP-A 0 208 580, la dispersion ainsi obtenue est soumise à un traitement thermique à une température comprise entre 80°C et 300°C, de préférence entre 90°C et 110°C, et encore plus préférentiellement, à la température de reflux du mélange réactionnel.

Les conditions du traitement thermique ne sont pas critiques : il peut être effectué sous pression atmosphérique ou sous pression telle que par exemple la pression de vapeur d'eau saturante correspondant à la température du traitement thermique. On conduit le traitement soit sous atmosphère d'air ou sous

EP 0 388 567 B1

atmosphère de gaz inerte, de préférence l'azote.

La durée de ce traitement peut varier dans de larges limites entre 2 et 48 heures, de préférence entre 2 heures et 24 heures.

En fin d'opération, on récupère un précipité solide qui est séparé par les techniques classiques de séparation : filtration, décantation, essorage et centrifugation.

Il est possible de soumettre le produit obtenu à une opération de séchage qui peut être conduite à une température comprise entre 15°C et 120°C, de préférence à température ambiante et qui peut être effectuée à l'air ou sous pression réduite, par exemple, entre 133,322 Pa et 13332,2 Pa.

D'une manière préférentielle, on met en oeuvre dans le procédé de l'invention, l'hydroxynitrate de cérium IV de formule (I) obtenu directement après séparation, sans le sécher.

Conformément au procédé de l'invention, on soumet ledit produit préparé par hydrolyse d'un sel nitrate de cérium IV à un traitement d'autoclavage, avant d'effectuer l'opération de calcination.

A cet effet, on met en oeuvre l'hydroxyde cérique sous forme de suspension dans une solution aqueuse d'une base décomposable qui constitue le milieu liquide d'autoclavage.

On entend par base décomposable, un composé présentant un $pk_b$ inférieur à 7 et susceptible de se décomposer dans les conditions de calcination de l'invention.

A titre illustratif de ces dernières, on peut citer l'ammoniaque, l'urée, l'acétate d'ammonium, l'hydrogénocarbonate d'ammonium, le carbonate d'ammonium, ou une amine primaire, secondaire, tertiaire, comme, par exemple, la méthylamine, l'éthylamine, la propylamine, la n-butylamine, la sec-butylamine, la n-pentylamine, l'amino-2 pentane, l'amino-2 méthyl-2 butane, l'amino-1 méthyl-3 butane, le diamino-1,2 éthane, le diamino-1,2 propane, le diamino-1,3 propane, le diamino-1,4 butane, le diamino-1,5 pentane, le diamino-1,6 hexane, la diméthylamine, la diéthylamine, la triméthylamine, la triéthylamine ou une amine quaternaire comme, par exemple, un hydroxyde de tétraalkylammonium ayant de préférence des radicaux alkyle contenant de 1 à 4 atomes de carbone et l'on fait appel plus particulièrement à l'hydroxyde de tétraméthylammonium ou l'hydroxyde de tétraéthylammonium.

On peut également mettre en oeuvre un mélange de bases.

On fait appel, de préférence, à une solution d'ammoniaque, d'hydroxyde de tétraalkylammonium ou leurs mélanges.

La concentration de la base dans le milieu liquide d'autoclavage n'est pas un facteur critique selon l'invention. Elle peut varier dans de larges limites, par exemple, entre 0,1 N et 11 N, mais il est préférable de faire appel à une solution dont la concentration varie entre 1 et 10 N.

Dans le milieu liquide, la concentration de l'hydroxyde cérique, exprimée en $CeO_2$ varie, de préférence, entre 0,1 et 3,0 moles/litre et, encore plus préférentiellement entre 0,2 et 1,0 mole/litre.

L'opération d'autoclavage est effectuée à une température située entre la température de reflux et la température critique du mélange réactionnel. On choisit de préférence une température comprise entre 100°C et 350°C, et encore plus préférentiellement, entre 150°C et 350°C.

La montée en température s'effectue à une vitesse qui n'est pas critique. On atteint la température réactionnelle en chauffant par exemple entre 30 minutes et 4 heures.

On peut conduire le procédé de l'invention, en introduisant l'hydroxyde cérique en suspension dans le milieu liquide dans une enceinte close, la pression ne résulte donc que du chauffage du mélange réactionnel.

Dans les conditions de températures données ci-dessus, et en milieu aqueux, on peut préciser, à titre illustratif que la pression varie entre 1($10^5$ Pa) et 165 Bars (165.$10^5$ Pa) de préférence entre 5(5. $10^5$ Pa) et 165 Bars (165.$10^5$ Pa).

Il est également possible d'exercer une pression extérieure qui s'ajoute alors à celle consécutive au chauffage.

La durée de l'opération d'autoclavage n'est pas critique. Elle peut varier entre 30 minutes et 6 heures.

A la fin de celle-ci, on laisse refroidir à l'inertie du système et l'on ramène le système à la pression atmosphérique.

On sépare le produit en suspension dans le milieu liquide selon les techniques classiques de séparation solide-liquide telles que décantation, essorage, filtration et/ou centrifugation.

Le produit recueilli peut être éventuellement soumis à un lavage, de préférence à l'eau, et/ou un séchage dans les conditions telles que précédemment décrites.

L'invention a également pour objet l'hydroxyde cérique ainsi recueilli, avant calcination.

Selon une dernière étape du procédé de l'invention, on calcine le produit obtenu à une température comprise entre 300°C et 1000°C et, de préférence, choisie entre 350°C et 800°C.

La durée de la calcination peut varier dans de larges limites entre 30 minutes et 10 heures et, de préférence, entre 2 et 6 heures.

6

Selon une variante du procédé de l'invention, l'hydroxyde cérique en suspension dans un milieu liquide est soumis à un premier traitement thermique en enceinte close jusqu'à une température et une pression inférieure respectivement à la température critique et à la pression critique du milieu liquide, en d'autres termes à un premier autoclavage.

Avantageusement le milieu liquide est de l'eau.

La suspension autoclavée obtenue est ensuite soumise à un second autoclavage tel que décrit ci-dessus, c'est à dire avec un milieu liquide contenant une base décomposable.

La suspension après le premier autoclavage peut être concentrée ou diluée, ou l'hydroxyde cérique ainsi autoclavé peut être séparé et récupéré par exemple par filtration avant d'être redispersé dans le second milieu d'autoclavage. Le précipité ainsi récupéré peut être lavé, séché avant sa redispersion.

Les conditions de ce premier autoclavage sont semblables à celles décrites pour l'autoclavage en milieu basique. Toutefois,la concentration en hydroxyde cérique, exprimée en $CeO_2$ peut être plus élevée et par exemple comprise entre 0,1 et 4 moles/l.

L'oxyde cérique selon l'invention présente une grande surface spécifique après calcination à basse et haute température si bien qu'il convient tout-à-fait bien dans le domaine de la catalyse, comme catalyseur ou comme support catalytique.

Il est particulièrement bien adapté pour être employé comme support catalytique dans les réactions de traitement des gaz d'échappement des moteurs à combustion interne.

Les exemples qui suivent, illustrent le nouvel oxyde cérique de l'invention et son procédé d'obtention. Ils sont donnés à titre illustratif, sans caractère limitatif.

Exemple 1 :

1. Synthèse de l'hydroxyde cérique

Dans un ballon tricol de 6 litres muni d'un thermomètre, d'un dispositif d'agitation, d'un système d'introduction de réactif (pompe doseuse), on introduit à température ambiante :
- 1000 $cm^3$ d'une solution de nitrate cérique contenant 1,24 moles/litre de cérium IV et ayant une acidité libre de 0,332 N.
- 2555 $cm^3$ d'une solution d'ammoniaque 0,3726 N.

L'addition de la solution d'ammoniaque, à température ambiante dans la solution de nitrate cérique est réalisée à 1664 $cm^3$/heure.

On obtient une dispersion colloïlade aqueuse d'un composé de cérium IV à une concentration exprimée en $CeO_2$ égale à 60 g/l et à un taux de neutralisation r = 0,5.

Dans une deuxième étape, on soumet la dispersion obtenue à un traitement thermique, dans un réacteur double enveloppe équipé d'un réfrigérant et d'un système d'agitation, à 100°C pendant 4 heures.

Après filtration du précipité, on recueille 287 g de produit jaune.

L'analyse chimique du produit obtenu montre la composition chimique suivante :

| | |
|---|---|
| - perte au feu | = 20 % |
| - $CeO_2$ | = 80 % |
| - rapport molaire $NO_3{}^-/Ce^{IV}$ | = 0,49 |
| - rapport molaire $NH_4{}^+/Ce^{IV}$ | = 0,025 |

2. Autoclavage de l'hydroxyde cérique

Dans un autoclave de 1 litre de volume utile, on introduit successivement 400 $cm^3$ d'une solution aqueuse d'ammoniaque 2 N et 24 g de l'hydroxyde cérique préparé tel que décrit sous 1.

Après homogénéisation de ce dernier dans son milieu, l'ensemble est porté à 180°C, soit environ 12 bars (12. $10^5$ Pa) pendant 1 heure, au moyen de chauffage approprié.

A la fin de ce traitement, on filtre le précipité sur Büchner.

On soumet ensuite deux fractions de ce produit humide à une opération de calcination dans les conditions suivantes : 6 heures à 350°C et 6 heures à 800°C.

On détermine ensuite selon les méthodes définies dans la description, la surface spécifique de l'oxyde cérique obtenu et son volume poreux.

On détermine la taille des cristallites perpendiculaires aux directions 110 et 120 et le taux de cristallisation, par diffraction aux rayons X. Les résultats obtenus sont consignés dans le tableau I :

Tableau I

| Référence exemple | Température de calcination °C | Surface spécifique m$^2$/g | Volume poreux cm$^3$/g | Taille cristallites nm | Taux de cristallisation % |
|---|---|---|---|---|---|
| 1 | 350 | 250 | 0,17 | 4 | 80 |
| 1 | 800 | 50 | 0,15 | 20 | 90 |

On remarque que l'oxyde cérique de l'invention présente une surface spécifique élevée mesurée après calcination à basse température (350°C) et à haute température (800°C).

Exemples 2 et 3

1. Synthèse de l'hydroxyde cérique

Dans ces essais, on met en oeuvre un hydroxyde cérique préparé selon l'exemple 1, 1° à la différence près que l'on adapte la quantité de base ajoutée de telle sorte que le taux de neutralisation soit égal à 1,5 dans l'exemple 2 et à 3,0 dans l'exemple 3.

2. Autoclavage de l'hydroxyde cérique

Selon le protocole opératoire de l'exemple 1, on met 24 g d'hydroxyde cérique préparé tel que décrit dans 1, en suspension dans 400 cm$^3$ d'une solution aqueuse d'ammoniaque 2 N et on le soumet à un traitement en autoclave à 180°C, pendant 1 heure.

A la fin de ce traitement thermique, on sépare le précipité par filtration et on le soumet à une opération de calcination dans les conditions suivantes : une fraction est calcinée 6 heures à 350°C et deux autres fractions sont calcinées 6 heures à 600°C et 800°C.

On rassemble les résultats obtenus dans le tableau II.

Tableau II

| référence de l'exemple | température de calcination °C | surface spécifique m$^2$/g |
|---|---|---|
| 2 | 350 | 260 |
| 2 | 600 | 150 |
| 2 | 800 | 50 |
| 3 | 350 | 260 |
| 3 | 600 | 140 |
| 3 | 800 | 45 |

Exemple 4

1. Synthèse de l'hydroxyde cérique

Dans cet essai on met en oeuvre un hydroxyde cérique préparé selon l'exemple 1.

2. Autoclavage de l'hydroxyde cérique

a) L'hydroxyde cérique est mis en suspension dans l'eau avec une concentration de 400 g/l exprimée en CeO$_2$. Cette suspension est portée à 180°C en enceinte close pendant 1 Heure. La pression d'autoclavage est d'environ 12 bars (12 10$^5$ Pa).

8

b) Après refroidissement de la suspension, on additionne de l'ammoniaque 2N pour obtenir une suspension à 60 g/l en $CeO_2$. Cette suspension est ensuite traitée comme dans l'exemple 2.
Les propriétés du produit obtenu sont les suivantes :
- après calcination à 350°C pendant 6 heures :
  surface spécifique : 187 $m^2$/g
  taille moyenne des cristallites : 5,5 - 6 nm
  % cristallisation : 97 %
- après calcination à 800°C pendant 6 heures :
  surface spécifique : 80 $m^2$/g
  taille moyenne des cristallites : 15 nm
  % cristallisation : 98 %
Le produit présente une perte au feu de l'ordre de 5 %.

**Revendications**

**1.** Oxyde cérique caractérisé par le fait qu'il présente une surface spécifique d'au moins 190 $m^2$/g, mesurée après calcination à une température comprise entre 350°C et 450°C et qu'il conserve une surface spécifique d'au moins 15 $m^2$/g lorsqu'il est soumis à une température comprise entre 800°C et 900°C.

**2.** Oxyde cérique selon la revendication 1 caractérisé par le fait qu'il présente une surface spécifique comprise entre 220 et 280 $m^2$/g, mesurée après calcination à une température comprise entre 350°C et 450°C.

**3.** Oxyde cérique selon la revendication 1 ou 2 caractérisé par le fait qu'il présente une surface spécifique comprise entre 20 et 100 $m^2$/g, mesurée après calcination à une température de 800°C.

**4.** Oxyde cérique selon l'une des revendications précédentes caractérisé par le fait qu'il présente un volume poreux compris entre 0,15 $cm^3$/g et 0,30 $cm^3$/g, mesuré après calcination à une température comprise entre 350°C et 450°C.

**5.** Oxyde cérique selon la revendication 4 caractérisé par le fait qu'il présente un diamètre moyen de pores variant entre 2 nm et 10 nm.

**6.** Oxyde cérique selon l'une des revendications précédentes caractérisé par le fait qu'il présente un volume poreux compris entre 0,15 $cm^3$/g et 0,30 $cm^3$/g, mesuré après calcination à une température de 800°C.

**7.** Oxyde cérique selon la revendication 6 caractérisé par le fait qu'il présente un diamètre moyen de pores variant entre 10 nm et 20 nm.

**8.** Oxyde cérique selon l'une des revendications précédentes caractérisé par le fait qu'il présente un taux de cristallisation supérieur à 80 % après calcination à une température comprise entre 350 et 450°C.

**9.** Oxyde cérique selon l'une des revendications précédentes caractérisé par le fait qu'il présente un taux de cristallisation supérieur à 90 % après calcination à une température de 800°C.

**10.** Procédé de préparation de l'oxyde cérique selon l'une des revendications 1 à 9 caractérisé par le fait qu'il consiste :
  - à mettre en suspension dans une solution aqueuse d'une base décomposable, un hydroxyde cérique répondant à la formule générale (I) =

  $Ce (M)_x (OH)_y (NO_3)_z$     (I)

  dans laquelle:
  - M représente un métal alcalin ou un radical ammonium quaternaire,
  - x est compris entre 0,01 et 0,2,
  - y est tel que, y = 4 - z + x,

- z est compris entre 0,4 et 0,7.
- à chauffer ladite suspension dans une enceinte close jusqu'à une température et une pression inférieures respectivement à la température critique et à la pression critique dudit milieu,
- à refroidir le milieu réactionnel et à le ramener à la pression atmosphérique,
- à séparer l'hydroxyde cérique ainsi traité,
- puis à le calciner.

11. Procédé de préparation de l'oxyde cérique selon l'une des revendications 1 à 9 caractérisé par le fait qu'il consiste :
- à mettre en suspension dans une solution aqueuse d'une base décomposable, un hydroxyde cérique obtenu selon un procédé qui consiste à préparer une dispersion colloïdale d'un composé de cérium IV en faisant réagir une solution aqueuse d'un sel de cérium IV et une base de telle sorte que l'on obtienne un taux de neutralisation inférieur ou égal à 3,0 à soumettre ladite dispersion à un traitement thermique ; puis à séparer le précipité formé,
- à chauffer ladite suspension dans une enceinte close jusqu'à une température et une pression inférieures respectivement à la température critique et à la pression critique dudit milieu,
- à refroidir le milieu réactionnel et à le ramener à la pression atmosphérique,
- à séparer l'hydroxyde cérique ainsi traité,
- puis à le calciner.

12. Procédé selon la revendication 10 ou 11, caractérisé en ce que préalablement à la mise en suspension dans une solution aqueuse d'une base décomposable en hydroxyde cérique, cet hydroxyde est mis en suspension dans l'eau, ladite suspension aqueuse étant chauffée dans une enceinte close jusqu'à une température et une pression inférieures respectivement à la température critique et à la pression critique du milieu.

13. Procédé selon la revendication 12 caractérisé en ce que la base décomposable est ajoutée à la suspension aqueuse d'hydroxyde cérique préalablement traitée thermiquement.

14. Procédé selon la revendication 12 caractérisé en ce que l'hydroxyde cérique contenu dans la suspension aqueuse préalablement traitée thermiquement est séparé et récupéré avant d'être remis en suspension dans une solution aqueuse d'une base décomposable.

15. Procédé selon l'une des revendications 12 à 14 caractérisé en ce que la concentration d'hydroxyde cérique dans la suspension aqueuse devant être préalablement traitée thermiquement est comprise entre 0,1 mole et 4 moles/l exprimée en $CeO_2$.

16. Procédé selon la revendication 11 caractérisé par le fait que l'on prépare la dispersion colloïdale d'un composé de cérium IV en faisant réagir une solution aqueuse d'un sel de cérium IV et une base de telle sorte que l'on obtienne un taux de neutral isation supérieur ou égal à 0,01 et inférieur ou égal à 3,0.

17. Procédé selon la revendication 16 caractérisé par le fait que la solution de sel de cérium IV est une solution aqueuse de nitrate cérique ou une solution aqueuse de nitrate céri-ammoniacal.

18. Procédé selon la revendication 17 caractérisé par le fait que la solution aqueuse de sel de cérium IV est une solution provenant de l'oxydation électrochimique d'une solution de nitrate céreux.

19. Procédé selon l'une des revendications 16 à 18 caractérisé par le fait que la concentration de la solution de sel de cérium exprimée en cérium IV est comprise entre 0,1 et 2 moles par litre.

20. Procédé selon la revendication 16 caractérisé par le fait que la base est une solution aqueuse d'ammoniaque.

21. Procédé selon l'une des revendications 16 et 20 caractérisé par le fait que la normalité de la solution basique est comprise entre 0,1 N et 5 N.

**22.** Procédé selon la revendication 16 caractérisé par le fait que la température de réaction entre la solution aqueuse de sel de cérium IV et la base se situe entre 0°C et 60°C.

**23.** Procédé selon la revendication 16 caractérisé par le fait que l'on mélange simultanément sous agitation la solution aqueuse de sel de cérium IV et la solution basique ou que l'on additionne la solution basique dans la solution de cérium IV ou inversement.

**24.** Procédé selon la revendication 11 caractérisé par le fait que l'on traite thermiquement la dispersion colloïdale du composé de cérium IV à une température comprise entre 80°C et 300°C.

**25.** Procédé selon la revendication 24 caractérisé par le fait que la température du traitement thermique est comprise entre 90°C et 110°C.

**26.** Procédé selon l'une des revendications 24 et 25 caractérisé par le fait que la durée du traitement thermique varie entre 2 heures et 24 heures.

**27.** Procédé selon l'une des revendications 10 à 15 caractérisé par le fait que la base décomposable est l'ammoniaque, l'urée, l'hydrogénocarbonate d'ammonium, le carbonate d'ammonium, une amine primaire, secondaire, tertiaire ou quaternaire ou leurs mélanges.

**28.** Procédé selon la revendication 27 caractérisé par le fait que la base décomposable est l'ammoniaque, un hydroxyde de tétraalkylammonium ou leurs mélanges.

**29.** Procédé selon l'une des revendications 10 et 11 caractérisé par le fait que la concentration de la solution basique varie entre 1 et 10 N.

**30.** Procédé selon l'une des revendications 10 et 11 caractérisé par le fait que la concentration de l'hydroxyde cérique exprimée en $CeO_2$ dans la suspension aqueuse d'une base décomposable varie entre 0,1 et 3,0 moles/litre.

**31.** Procédé selon la revendication 30 caractérise par le fait que ladite concentration est comprise entre 0,2 et 1,0 mole/litre.

**32.** Procédé selon l'une des revendications 10 à 12 caractérisé par le fait que la température d'autoclavage en milieu aqueux ou en milieu contenant une base décomposable varie entre 100 et 350°C.

**33.** Procédé selon la revendication 32 caractérisé par le fait que ladite température est comprise entre 150 et 350°C.

**34.** Procédé selon l'une des revendications 10 à 12 caractérisé par le fait que la pression d'autoclavage en milieu aqueux ou en milieu contenant une base décomposable varie entre 1 ($10^5$ Pa) et 165 bars ($165.10^5$ Pa).

**35.** Procédé selon la revendication 34 caractérisé par le fait que ladite pression est comprise entre 5 ($5.10^5$ Pa) et 165 bars ($165.10^5$ Pa).

**36.** Procédé selon l'une des revendications 10 et 11 caractérisé par le fait que la durée de l'autoclavage en milieu aqueux ou en milieu contenant une base décomposable varie entre 30 minutes et 6 heures.

**37.** Procédé selon l'une des revendications 10 à 12 caractérisé par le fait que la température de calcination est comprise entre 300 et 1000°C.

**38.** Procédé selon la revendication 37 caractérisé par le fait que ladite température est comprise entre 350 et 800°C.

**39.** Procédé selon l'une des revendications 10 à 12 caractérisé par le fait que la durée de calcination varie entre 2 et 6 heures.

**Claims**

1.  Ceric oxide, characterized in that it has a specific surface of at least 190 m²/g, measured after calcination at a temperature of between 350 °C and 450 °C, and in that it retains a specific surface of at least 15 m²/g when it is subjected to a temperature of between 800 °C and 900 °C.

2.  Ceric oxide according to claim 1, characterized in that it has a specific surface of between 220 and 280 m²/g, measured after calcination at a temperature of between 350 °C and 450 °C.

3.  Ceric oxide according to claim 1 or 2, characterized in that it has a specific surface of between 20 and 100 m²/g, measured after calcination at a temperature of 800 °C.

4.  Ceric oxide according to one of the preceding claims, characterized in that it has a pore volume of between 0.15 cm³/g and 0.30 cm³/g, measured after calcination at a temperature of between 350 °C and 450 °C.

5.  Ceric oxide according to claim 4, characterized in that it has a mean pore diameter varying between 2 nm and 10 nm.

6.  Ceric oxide according to one of the preceding claims, characterized in that it has a pore volume of between 0.15 cm³/g and 0.30 cm³/g, measured after calcination at a temperature of 800 °C.

7.  Ceric oxide according to claim 6, characterized in that it has a mean pore diameter varying between 10 nm and 20 nm.

8.  Ceric oxide according to one of the preceding claims, characterized in that it has a degree of crystallization greater than 80% after calcination at a temperature of between 350 and 450 °C.

9.  Ceric oxide according to one of the preceding claims, characterized in that it has a degree of crystallization greater than 90% after calcination at a temperature of 800 °C.

10. Process for the preparation of ceric oxide according to one of claims 1 to 9, characterized in that it consists:
    - in suspending, in an aqueous solution of a decomposable base, a ceric hydroxide corresponding to the general formula (I) =

    $$Ce(M)_x(OH)_y(NO_3)_z \quad (I)$$

    in which:
    - M represents an alkali metal or a quaternary ammonium radical,
    - x is between 0.01 and 0.2,
    - y is such that $y = 4 - z + x$,
    - z is between 0.4 and 0.7,
    - in heating the said suspension in an enclosed space to a temperature and a pressure which are respectively lower than the critical temperature and the critical pressure of the said medium,
    - in cooling the reaction medium and in bringing it back to atmospheric pressure,
    - in separating the ceric hydroxide thus treated,
    - and in then calcining it.

11. Process for the preparation of ceric oxide according to one of claims 1 to 9, characterized in that it consists:
    - in suspending, in an aqueous solution of a decomposable base, a ceric hydroxide obtained according to a process which consists in preparing a colloidal dispersion of a cerium(IV) compound by reacting an aqueous solution of a cerium(IV) salt and a base so that a degree of neutralization is obtained which is less than or equal to 3.0, in subjecting the said dispersion to a heat treatment and in then separating the precipitate formed,
    - in heating the said suspension in an enclosed space to a temperature and a pressure which are respectively lower than the critical temperature and the critical pressure of the said medium,

- in cooling the reaction medium and in bringing it back to atmospheric pressure,
- in separating the ceric hydroxide thus treated,
- and in then calcining it.

12. Process according to claim 10 or 11, characterized in that, prior to suspending a ceric hydroxide in an aqueous solution of a decomposable base, this hydroxide is suspended in water, the said aqueous suspension being heated in an enclosed space to a temperature and a pressure respectively lower than the critical temperature and the critical pressure of the medium.

13. Process according to claim 12, characterized in that the decomposable base is added to the aqueous ceric hydroxide suspension which had been heat-treated beforehand.

14. Process according to claim 12, characterized in that the ceric hydroxide contained in the aqueous suspension which had been heat-treated beforehand is separated and recovered before being resuspended in an aqueous solution of a decomposable base.

15. Process according to one of claims 12 to 14, characterized in that the ceric hydroxide concentration in the aqueous suspension which must be heat-treated beforehand is between 0.1 mol and 4 mol/l, expressed as $CeO_2$.

16. Process according to claim 11, characterized in that the colloidal dispersion of a cerium(IV) compound is prepared by reacting an aqueous solution of a cerium(IV) salt and a base so that a degree of neutralization is obtained which is greater than or equal to 0.01 and less than or equal to 3.0.

17. Process according to claim 16, characterized in that the cerium(IV) salt solution is an aqueous ceric nitrate solution or an aqueous ceric ammonium nitrate solution.

18. Process according to claim 17, characterized in that the aqueous cerium(IV) salt solution is a solution arising from the electrochemical oxidation of a cerous nitrate solution.

19. Process according to one of claims 16 to 18, characterized in that the concentration of the cerium salt solution, expressed as cerium(IV), is between 0.1 and 2 mol per litre.

20. Process according to claim 16, characterized in that the base is an aqueous ammonia solution.

21. Process according to either of claims 16 and 20, characterized in that the normality of the basic solution is between 0.1N and 5N.

22. Process according to claim 16, characterized in that the temperature of reaction between the aqueous cerium(IV) salt solution and the base lies between 0°C and 60°C.

23. Process according to claim 16, characterized in that the aqueous cerium(IV) salt solution and the basic solution are mixed simultaneously with stirring or in that the basic solution is added to the cerium(IV) solution or vice versa.

24. Process according to claim 11, characterized in that the colloidal dispersion of the cerium(IV) compound is heat-treated at a temperature of between 80°C and 300°C.

25. Process according to claim 24, characterized in that the temperature of the heat treatment is between 90°C and 110°C.

26. Process according to either of claims 24 and 25, characterized in that the duration of the heat treatment varies between 2 hours and 24 hours.

27. Process according to one of claims 10 to 15, characterized in that the decomposable base is ammonia, urea, ammonium hydrogencarbonate, ammonium carbonate, a primary, secondary, tertiary or quaternary amine or their mixtures.

28. Process according to claim 27, characterized in that the decomposable base is ammonia, a tetraalkylammonium hydroxide or their mixtures.

29. Process according to either of claims 10 and 11, characterized in that the concentration of the basic solution varies between 1 and 10N.

30. Process according to either of claims 10 and 11, characterized in that the concentration of the ceric hydroxide, expressed as $CeO_2$, in the aqueous suspension of a decomposable base varies between 0.1 and 3.0 mol/litre.

31. Process according to claim 30, characterized in that the said concentration is between 0.2 and 1.0 mol/litre.

32. Process according to one of claims 10 to 12, characterized in that the autoclaving temperature in aqueous medium or in medium containing a decomposable base varies between 100 and 350°C.

33. Process according to claim 32, characterized in that the said temperature is between 150 and 350°C.

34. Process according to one of claims 10 to 12, characterized in that the autoclaving pressure in aqueous medium or in medium containing a decomposable base varies between 1 ($10^5$ Pa) and 165 bars ($165.10^5$ Pa).

35. Process according to claim 34, characterized in that the said pressure is between 5 ($5.10^5$ Pa) and 165 bars ($165.10^5$ Pa).

36. Process according to either of claims 10 and 11, characterized in that the duration of the autoclaving in aqueous medium or in medium containing a decomposable base varies between 30 minutes and 6 hours.

37. Process according to one of claims 10 to 12, characterized in that the calcination temperature is between 300 and 1000°C.

38. Process according to claim 37, characterized in that the said temperature is between 350 and 800°C.

39. Process according to one of claims 10 to 12, characterized in that the duration of calcination varies between 2 and 6 hours.

**Patentansprüche**

1. Ceroxid, dadurch gekennzeichnet, daß es eine spezifische Oberfläche von mindestens 190 m2/g, gemessen nach Calcinierung bei einer Temperatur zwischen 350 °C und 450 °C, besitzt, und eine spezifische Oberfläche von mindestens 15 m2/g beibehält, wenn es einer Temperatur zwischen 800 °C und 900 °C unterworfen wird.

2. Ceroxid nach Anspruch 1, dadurch gekennzeichnet, daß es eine spezifische Oberfläche zwischen 220 und 280 m2/g besitzt, gemessen nach Calcinierung bei einer Temperatur zwischen 350 °C und 450 °C.

3. Ceroxid nach Anspruch 1 oder 2, dadurch gekennzeichnet, daß es eine spezifische Oberfläche zwischen 20 und 100 m2/g aufweist, gemessen nach Calcinierung bei einer Temperatur von 800 °C.

4. Ceroxid nach einem der vorhergehenden Ansprüchen, dadurch gekennzeichnet, daß es ein Porenvolumen zwischen 0.15 cm3/g und 0.30 cm3/g aufweist, gemessen nach Calcinierung bei einer Temperatur zwischen 350 °C und 450 °C.

5. Ceroxid gemäß Anspruch 4, dadurch gekennzeichnet, daß es einen mittleren Porendurchmesser aufweist, der im Bereich zwischen 2 nm und 10 nm variiert.

EP 0 388 567 B1

**6.** Ceroxid nach einem der vorhergehenden Ansprüche, dadurch gekennzeichnet, daß es ein Porenvolumen zwischen 0.15 cm3/g und 0.30 cm3/g besitzt, gemessen nach Calcinierung bei einer Temperatur von 800 °C.

**7.** Ceroxid gemäß Anspruch 6, dadurch gekennzeichnet, daß es einen mittleren Porendurchmesser besitzt, der zwischen 10 nm und 20 nm variiert.

**8.** Ceroxid nach einem der vorhergehenden Ansprüche, dadurch gekennzeichnet, daß es nach Calcinierung bei einer Temperatur zwischen 350 und 450 °C einen Kristallisationsgrad von oberhalb 80 % aufweist.

**9.** Ceroxid nach einem der vorhergehenden Ansprüche, dadurch gekennzeichnet, daß es nach Calcinierung bei einer Temperatur von 800 °C einen Kristallisationgrad von größer als 90 % aufweist.

**10.** Verfahren zur Herstellung eines Ceroxids gemäß einem der Ansprüche 1 bis 9, dadurch gekennzeichnet, daß man in einer wässerigen Lösung einer zersetzlichen Base ein Cerhydroxid, das der allgemeinen Formel (I) =

Ce (M)x (OH)y (NO3)z      (I)

entspricht, suspendiert, worin bedeuten:
- M ein Alkalimetall oder ein quarternäres Ammoniumradikal,
- x zwischen 0.01 und 0.2 liegt,
- y so ist, daß y = 4-z+x,
- z zwischen 0.4 und 0.7 liegt,
- diese Suspension in einem Geschlossenen Gefäß bis auf eine Temperatur und einen Druck unterhalb der kritischen Temperatur und des kritischen Drucks des Reaktionsmilieus erhitzt,
- das Reaktionsmilieu abkühlt und auf Atmosphärendruck bringt,
- das so behandelte Cerhydroxid abtrennt,
- und dieses dann calciniert.

**11.** Verfahren zur Herstellung von Ceroxid gemäß einem der Ansprüche 1 bis 9, dadurch gekennzeichnet, daß es besteht aus:
- Herstellen einer Suspension eines Cerhydroxids in einer wässerigen Lösung einer zersetzbaren Base, hergestellt nach einem Verfahren, bei dem man eine kolloidale Dispersion einer Cer IV-Verbindung herstellt, indem man eine wässerige Lösung eines Cer(IV)-Salzes und einer Base reagieren läßt, um einen Neutralisationsgrad unterhalb oder gleich 3.0 zu erhalten, und diese Dispersion einer thermischen Behandlung unterwirft, und den gebildeten Niederschlag abtrennt,
- die Suspension in einem geschlossenen Gefäß auf eine Temperatur und einen Druck unterhalb der entsprechenden kritischen Temperatur und des kritischen Drucks dieses Reaktionsmilieus erhitzt,
- das Reaktionsgemisch abkühlt und auf Atmosphärendruck zurückbringt,
- das so behandelte Cerhydroxid abtrennt,
- und dieses calciniert.

**12.** Verfahren nach Anspruch 10 oder 11, dadurch gekennzeichnet, daß man vor Herstellung einer Suspension eines Cerhydroxids in einer wässerigen Lösung einer zersetzbaren Base dieses Hydroxid in wässerige Suspension bringt, und diese wässerige Suspension in einem geschlossenen Gefäß auf eine Temperatur und einen Druck unterhalb der entsprechenden kritischen Temperatur und des kritischen Drucks des Reaktionsmilieus erhitzt.

**13.** Verfahren nach Anspruch 12, dadurch gekennzeichnet, daß man die zersetzbare Base zu einer im voraus thermisch behandelten Wässerigen Cerhydroxidsuspension zugibt.

**14.** Verfahren nach Anspruch 12, dadurch gekennzeichnet, daß das in der wässerigen Suspension enthaltene Cerhydroxid vor der thermischen Behandlung abgetrennt und gewonnen wird, bevor es wieder in einer wässerigen Lösung einer zersetzbaren Base in Suspension gebracht wird.

15

**15.** Verfahren nach einem der Ansprüche 12 bis 14, dadurch gekennzeichnet, daß die Konzentration des Cerhydroxids in der wässerigen Suspension vor der thermischen Behandlung zwischen 0.1 Mol und 4 Mol/l, ausgedrückt in $CeO_2$, liegt.

**16.** Verfahren nach Anspruch 11, dadurch gekennzeichnet, daß man die kolloidale Dispersion einer Cer (IV)-Verbindung herstellt, indem man eine wässerige Lösung eines Cer(IV)-Salzes und einer Base zu Reaktion bringt, um einen Neutralisationsgrad von größer oder gleich 0.01 und von weniger oder gleich 3.0 zu erhalten.

**17.** Verfahren nach Anspruch 16, dadurch gekennzeichnet, daß die Lösung des Cer(IV)-Salzes eine wässerige Lösung von Cernitrat oder eine wässerige Lösung von ammoniakalischem Cernitrat ist.

**18.** Verfahren nach Anspruch 17, dadurch gekennzeichnet, daß die wässerige Lösung des Cer(IV)-Salzes eine Lösung ist, die aus der elektrochemischen Oxidation einer Lösung von Cer (III)-Nitrat stammt.

**19.** Verfahren nach einem der Ansprüche 16 bis 18, dadurch gekennzeichnet, daß die Konzentration der Lösung des Cersalzes, ausgedrückt als Cer(IV), zwischen 0.1 und 2 Mol/l beträgt.

**20.** Verfahren nach Anspruch 16, dadurch gekennzeichnet, daß die Base eine wässerige ammoniakalische Lösung ist.

**21.** Verfahren nach einem der Ansprüche 16 und 20, dadurch gekennzeichnet, daß die Normalität der basischen Lösung zwischen 0.1 N und 5 N liegt.

**22.** Verfahren nach Anspruch 16, dadurch gekennzeichnet, daß die Temperatur der Reaktion zwischen der wässerigen Lösung des Cer(IV)-Salzes und der Base zwischen 0 °C und 60 °C liegt.

**23.** Verfahren nach Anspruch 16, dadurch gekennzeichnet, daß man gleichzeitig unter Rühren die wässerige Lösung des Cer(IV)-Salzes und die basische Lösung mischt oder daß man die basische Lösung zur Lösung des Cer(IV)-Salzes oder umgekehrt zugibt.

**24.** Verfahren nach Anspruch 11, dadurch gekennzeichnet, daß man die kolloidale Dispersion der Cer(IV)-Verbindung bei einer Temperatur zwischen 80 °C und 300 °C thermisch behandelt.

**25.** Verfahren nach Anspruch 24, dadurch gekennzeichnet, daß die Temperatur der thermischen Behandlung zwischen 90 °C und 110 °C liegt.

**26.** Verfahren nach einem der Ansprüche 24 und 25, dadurch gekennzeichnet, daß die Dauer der thermischen Behandlung zwischen 2 Stunden und 24 Stunden variiert.

**27.** Verfahren nach einem der Ansprüche 10 bis 15, dadurch gekennzeichnet, daß die zersetzbare Base Ammoniak, Harnstoff, Ammoniumhydrogencarbonat, Ammoniumcarbonat, ein primäres Amin, ein sekundäres Amin, ein tertiäres Amin, ein quaternäres Amin Oder Mischungen davon ist.

**28.** Verfahren nach Anspruch 27, dadurch gekennzeichnet, daß die zersetzbare Base Ammoniak, ein Tetraalkylammoniumhydroxid oder ihre Mischungen ist.

**29.** Verfahren nach einem der Ansprüche 10 und 11, dadurch gekennzeichnet, daß die Konzentration der basischen Lösung zwischen 1 und 10 N variiert.

**30.** Verfahren nach einem der Ansprüche 10 und 11, dadurch gekennzeichnet, daß die Konzentration des Cerhydroxids, ausgedrückt als $CeO_2$, in der wässerigen Suspension der zersetzbaren Base zwischen 0.1 und 3.0 Mol/l variiert.

**31.** Verfahren nach Anspruch 30, dadurch gekennzeichnet, daß die Konzentration zwischen 0.2 und 1.0 Mol/l liegt.

**32.** Verfahren nach einem der Ansprüche 10 bis 12, dadurch gekennzeichnet, daß die Temperatur der Autoklavenbehandlung im wässerigen Milieu oder im Milieu das eine zersetzbare Base enthält, zwischen 100 und 350 °C variiert.

**33.** Verfahren nach Anspruch 32, dadurch gekennzeichnet, daß die Temperatur zwischen 150 und 350 °C liegt.

**34.** Verfahren nach einem der Ansprüche 10 bis 12, dadurch gekennzeichnet, daß der Druck des Autoklaven im wässerigen Milieu oder im Milieu, das eine zersetzbare Base enthält, zwischen 1($10^5$ Pa) und 165 bar (165.$10^5$ Pa) liegt.

**35.** Verfahren nach Anspruch 34, dadurch gekennzeichnet, daß der Druck zwischen 5 (5.$10^5$ Pa) und 165 bar (165.$10^5$ Pa) liegt.

**36.** Verfahren nach einem der Ansprüche 10 und 11, dadurch gekennzeichnet, daß die Dauer der Autoklavenbehandlung im wässerigen Milieu oder im Milieu, das die zersetzbare Base enthält, zwischen 30 Minuten und 6 Stunden variiert.

**37.** Verfahren nach einem der Ansprüche 10 bis 12, dadurch gekennzeichnet, daß die Temperatur der Calcinierung zwischen 300 und 1000 °C liegt.

**38.** Verfahren nach Anspruch 37, dadurch gekennzeichnet, daß die Temperatur zwischen 350 und 800 °C liegt.

**39.** Verfahren nach einem der Ansprüche 10 bis 12, dadurch gekennzeichnet, daß die Dauer der Calcinierung zwischen 2 und 6 Stunden variiert.